# EUROPEAN PATENT SPECIFICATION

(11) **EP 2 098 293 B1**
(45) Date of publication and mention of the grant of the patent: **24.04.2013**
(21) Application number: 08101878.0
(22) Date of filing: 22.02.2008
(51) Int. Cl.: B01L 3/00

(54) **Microtitre plate**
Mikrotiterplatte
Plaque de microtitrage

(43) Date of publication of application: 09.09.2009
(73) Proprietor: Qiagen Instruments AG, 8634 Hombrechtikon (CH)
(72) Inventor: Hagerlid, Peter, SE-753 34, Uppsala (SE); Smith, David, SE-741 96, Knivsta (SE)
(74) Representative: Rystedt, Per Hampus

(56) References cited:
- EP-A- 0 844 025
- US-A- 6 033 605

## Description

### FIELD OF INVENTION

The present invention involves a microtitre plate with reduced optical cross-talk between wells. The present invention also relates to such microtitre plates for use in analysis methods using light emission or transmission.

### BACKGROUND

A large number of biotechnological analysis methods utilize multi-well sample plates, commonly referred to as microtitre plates. Separate reactions are performed in each well and the end products of the reactions are used to interpret the result of the analysis. Alternatively the reactions may be followed in real-time.

Such analytical methods may be performed in solution, i.e. all the reactants are present in the solution. If the analyte to be detected is present, the reactants give some sort of signal, such as appearance or change in colour, light emission, turbidity or the like. One example is Pyrosequencing® analysis, which involves detection of light emitted by an enzyme cascade system after incorporation of a nucleotide into a nucleic acid strand. The analytical methods may also be performed on the solid phase of the well, e.g. in a so-called sandwich assay wherein a molecule with affinity for an analyte is bound to the bottom of the well, a sample possibly containing the analyte is added, a labelled molecule with affinity for the analyte is added, excess label is washed away and any remaining label is detected, possibly after addition of a developing agent.

The signal to be detected in methods such as those above may involve light emission from the well or light transmission through the well. It is common to automatically detect such light below the bottom of the well by means of various light detecting means. The microtitre plate therefore has a transparent bottom to enable real-time light detection from below whilst reagents can be dispensed from above. If the colour or turbidity of the well's contents is to be measured, light may be emitted from a light source above the plate.

The most convenient and economic method of manufacturing such a plate is to produce it from a sheet of transparent material, for example by vacuum-moulding or injection moulding. Thus the whole plate is transparent. The transparent plastic can, however, guide light from one well to another. This phenomenon is caused by internal reflection and transmission of light and results in a false signal from a well where no light signal should be produced. The result is an incorrect result. Such reflection and transmission should therefore be avoided.

WO 94/21379 presents a construction where the walls of the wells, inside and/or outside, are coated with a reflective material such as metal, ceramic or a semiconductor. Alternatively, the plate is made from a reflective material, or by placing a transparent microplate inside a reflective plate. However, these constructions are expensive to produce. Also, when using such a coating technique, there is a risk of coating the bottom surface of the well. Additionally, a coating on the inside might affect the desired biological/chemical process in the well. Said document also states that the use of pigments to colour the plastic, thereby reducing the transmittance or reflectance, is also known. These solutions will increase the manufacturing cost if a transparent bottom is needed, since the plate needs to be formed with two different materials.

U.S. 6,051,191 provides a microplate which reduces the cross-talk through a construction containing two different polymers. The well consists of a transparent polymer that is placed in a matrix of opaque polymer. The opaque polymer covers the outside of the walls of the wells, as well as the top surfaces between said wells, leaving a well with a transparent bottom and opaque walls. While this microplate reduces the cross-talk between the wells, it also requires a complex multistep production process, which makes it expensive to produce.

All the above-mentioned microtitre plates could be used in light-based analytical methods. However, there is a need for a microtitre plate that is easy to manufacture, is cheap, and still reduces the transmittance and/or reflectance of light when used in analytical methods based on light detection or measurement.

### SUMMARY OF THE INVENTION

It is an objective of the present invention to provide a microtitre plate construction that facilitates real-time measurements and exhibits reduced optical cross-talk. The manufacturing cost of the microtitre plate should be low enough to make it disposable.

In a first aspect of the invention, a microtitre plate with wells having transparent bottoms is provided, wherein said microtitre plate has at least one physical deformation on the top surface between at least two adjacent wells. The physical deformations may have the shape of a channel, a ridge, a hole, a slit or a step.

In a further embodiment, each surface between adjacent wells has at least one physical deformation.

In a further embodiment, the physical deformations may surround the wells in any geometrical pattern. This may be done, for example, in the form of a grid or circles or squares.

The microtitre plate according to the present invention may suitably be used for analysis methods measuring light emission or transmission, such as chemiluminescence, bioluminescence, photometry and/or fluorescence.

The present invention provides a microtitre plate with wells having transparent bottoms that allow real-time measurements, including simultaneous addition of reactants during the measurements. Cross-talk reduction is accomplished via physical deformations between the wells. The microtitre plate can be manufactured in one piece through conventional processing techniques which means an easy manufacturing process and low production costs.

### BRIEF DESCRIPTION OF THE DRAWINGS

Fig 1 shows a microtitre plate, as known in the prior art, seen from above (a) and a cross-section of said microtitre plate (b). The dotted arrows indicate the distribution of wells.
Fig 2. shows a cross-sectional view of a microtitre plate according to the present invention provided with different physical deformations and different combinations of the same.
Fig. 3 shows a cross-sectional view of a microtitre plate according to the present invention provided with a construction including holes or slits, and a combination of holes or slits with a ridge. Dotted lines represent holes or slits.
Fig. 4 shows a microtitre plate according to the present invention seen from above provided with a physical deformation surrounding a well. The hatched areas represents the physical deformations.
Fig. 5 shows two microtitre plates according to Example 1. Plate 1 has a channel between the wells while Plate 2 does not.
Fig. 6 shows a microtitre plate according to Example 2.

### DETAILED DESCRIPTION OF THE INVENTION

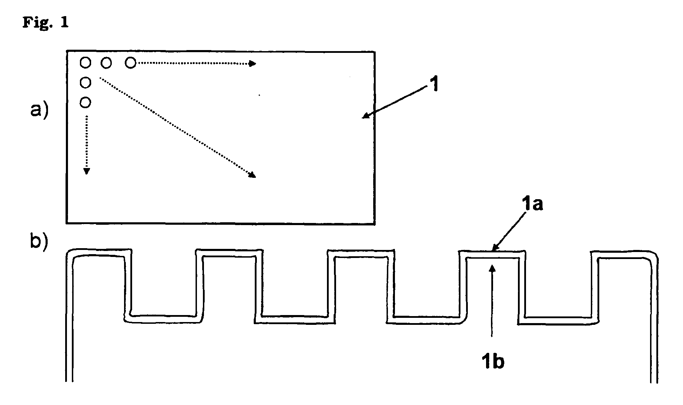

The present microtitre plate may have the general structure of a conventional microtitre plate according to Figure 1. A microtitre plate would normally be a rectangular plastic multi-well plate, but other sizes or shapes are also possible. To facilitate real-time measurements, the well needs to have a transparent bottom in order to allow light to pass through for detection. Detection from above is also possible. Since emitted/transmitted light is spread in all directions, it is transmitted and/or reflected via the plastic material into adjacent wells causing an incorrect detection. This "cross-talk" should be reduced to obtain accurate measurements.

Referring to Fig.1, the top surface of the microtitre plate is designated 1 and refers to the whole surface, while reference numbers 1a or 1b indicate a surface between two adjacent wells. 1a is the upper top surface while 1b is the lower top surface. These reference numbers will be used when describing the present invention below. Such a conventional structure for a microtitre plate is used as a basis for the microtitre plate according to the present invention.

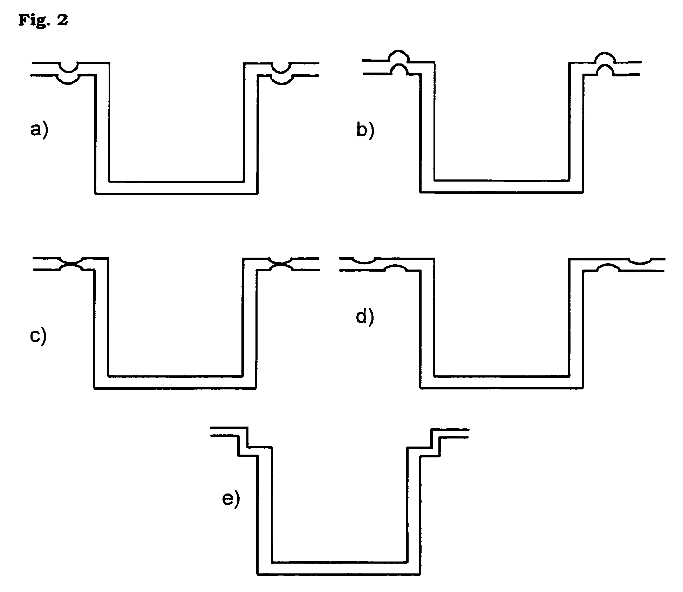

Figures 2 shows an embodiment of the microtitre plate according to the present invention comprising different physical deformations for top surfaces 1a and 1b. One or more channels or ridges may be formed on either surface. Channels may be formed on both surfaces at the same point, thus reducing the thickness of the material. Also, the physical deformations can be situated on only one side. Any combination of the physical deformations shown in Figures 2a-e is possible.

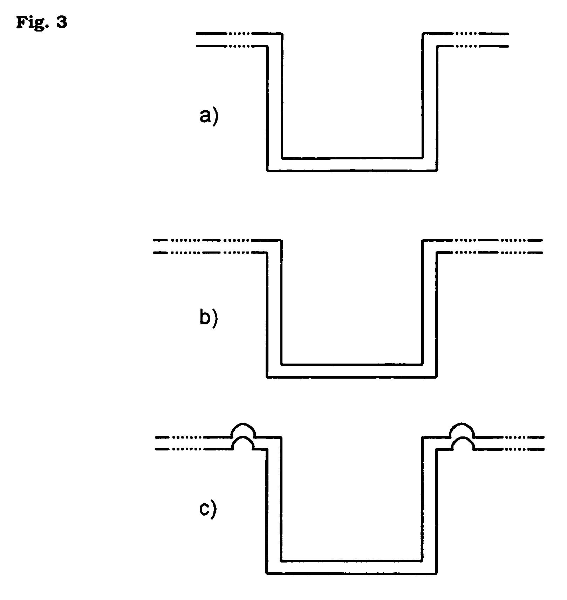

Figure 3 shows embodiments wherein one or more holes or slits in the top surface between the wells are used to reduce the transmission of light in the plate. The dotted lines represent the holes or slits. Said holes or slits reduce the cross-talk between the wells, but obviously do not surround the wells entirely. Figure 3 also shows a combination of holes or slits with a ridge.

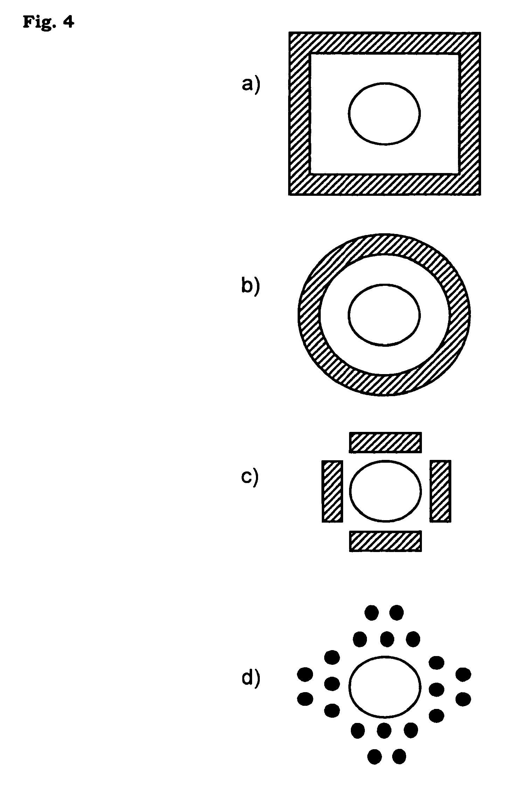

Figures 4a-d show geometrical patterns of physical deformations surrounding a well, the hatched areas represent the physical deformation. Both continuous and non-continuous patterns are possible.

The shape, height or depth of the physical deformation(s) and the geometrical pattern in which they surround the well are not crucial, as long as the deformations reduce the cross-talk. In the case the physical deformations have the shape of a channel or a ridge, suitably the height of the ridges, or the depth of the channels, is suitably between 0.1 times and 10 times of the thickness of the plastic material used for manufacturing the microtitre plate, preferably between 0.5 to 10 times and most preferably between 2 to 6 times the thickness of the plastic material. Typically the plastic material is about 0.5 mm thick.

The physical deformations may be formed during the manufacturing process of the microtitre plate by using a mould with the desired structure. Preferably, the microtitre plate is manufactured in one piece by vacuum moulding. Other suitable manufacturing techniques known to a person skilled in the art may be used, such as injection moulding or compression moulding.

The microtitre plate according to the present invention can suitably be used in analysis methods depending on light detection, measuring light emitted in, or transmitted through, the wells of the microtitre plate, and at different wave lengths. Light can be detected either from above or below the plate. Various light-emitting phenomena can be analysed such as bioluminescence, chemiluminescence, photometry and fluorescence. The present invention is also suitable for sequencing-by-synthesis methods.

### EXAMPLES

### Ex. 1

A channel was formed between the wells. This channel stopped a substantial proportion of any light guided through the plastic from entering the neighbouring well.

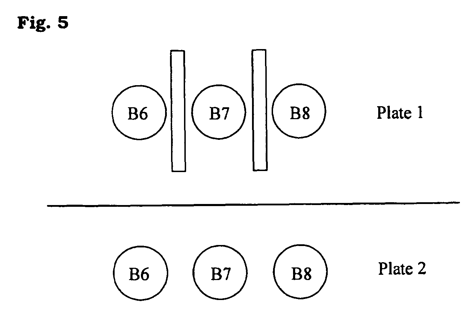

Two plates were manufactured from the same plastic. Plate 1 had a channel between the wells whereas Plate 2 did not, as shown in Figure 5.

Wells B6-8 were filled with 20 µl Annealing Buffer used to perform a Pyrosequencing® reaction. Enzyme and substrate for performing Pyrosequencing analysis were added to well B7. Pyrosphosphate was dispensed into B7 in Dispensation 2, to give a high signal. Water was dispensed into B6 and B8, which should not give a signal. In this way only Dispensation 2 in well B7 should generate a signal. B6 and B8 were used to measure cross-talk. The dispensations in the wells are described in the table below.

| | Dispensation | | |
|---|---|---|---|
| Well | 1 | 2 | 3 |
| B6 | Water | Water | Water |
| B7 | Water | Pyrophosphate | Water |
| B8 | Water | Water | Water |

The results of the tests are shown below

| **Plate 1** | | | | | |
|---|---|---|---|---|---|
| | Signal from Dispensation | | | Cross-talk (signal in B6 or B8) | |
| Well | 1 | 2 | 3 | Peak size | As % of peak in B7 |
| B6 | 0 | 0.03 | 0.04 | 10.5 | 1.35% |
| B7 | 0.11 | 777.25 | 0 | - | - |
| B8 | 0.04 | 0.1 | 0.14 | 10 | 1.29% |

| **Plate 2** | | | | | |
|---|---|---|---|---|---|
| B6 | 0.78 | 0.05 | 3.73 | 17 | 3.01% |
| B7 | 0.06 | 565.14 | 0.01 | | |
| B8 | 0.1 | 0.14 | 0.13 | 16 | 2.83% |

These results clearly show that the addition of channels between wells (Plate 1) reduces the cross-talk in comparison with a plate without channels between wells is used (Plate 2). The percent values given in column on the right hand side represent the signal ratio between B6 or B8 and B7. When comparing the said ratios for the wells without channels and with channels, the cross-talk was reduced by more than 50%.

### Ex. 2

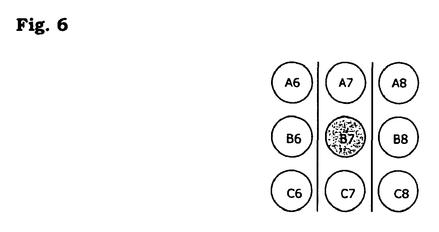

Slits were made between wells as shown in Figure 6.

All 9 wells were filled with 20 µl Annealing Buffer used to perform a Pyrosequencing® reaction. Enzyme and substrate for performing Pyrosequencing analysis were added to the central well. Three dispensations were made into all the wells. All dispensations, except the 2^{nd} dispensation into the central well, were water, which should not give a signal. Pyrosphosphate was dispensed, as dispensation 2, into the central well to give a high signal. The signals from all wells were measured after each dispensation. The results are shown below.

| Well | Signal from dispensation | | |
|---|---|---|---|
| | Disp 1 | Disp 2 | Disp 3 |
| A6 | -0.08 | 1.26 | -0.06 |
| A7 | -0.07 | -0.19 | -0.15 |
| A8 | -0.1 | 0.79 | -0.12 |
| B6 | -0.01 | -0.13 | -0.1 |
| B7 | -0.1 | 658.45 | -0.08 |
| B8 | -0.04 | -0.12 | -0.14 |
| C6 | -0.06 | 0.91 | -0.1 |
| C7 | -0.05 | -0.18 | -0.06 |
| C8 | -0.07 | 0.62 | -0.1 |

The signals from Dispensation 2, as a percent relative to the signal in the central well B7, are given below, in the same layout as the diagram above.

| | | |
|---|---|---|
| 0.19 | 4.1 | 0.12 |
| 0.46 | | 0.46 |
| 0.14 | 3.8 | 0.09 |

Thus the slits between the wells significantly reduced the cross-talk (compare the values for wells A6, B6, C6, A8, B8 and C8, with those for A7 and C7).

## Claims

1. A microtitre plate with wells having transparent bottoms, wherein said microtitre plate comprises at least one physical deformation on the top surface between at least two adjacent wells.

2. A microtitre plate according to claim 1, wherein said physical deformation has the shape of a channel, a ridge, a hole, a slit or a step.

3. A microtitre plate according to claim 1 or 2, wherein the physical deformation has the shape of a channel.

4. A microtitre plate according to any of the claims 1-3, wherein the physical deformations surround the wells in any geometrical pattern.

5. A microtitre plate according to claim 4, wherein the physical deformations surround the wells in the form of circles, grids or squares.

6. A microtitre plate according to any of the preceding claims, wherein the microtitre plate is manufactured in one piece.

7. A microtitre plate according to claim 6, wherein the microtitre plate is manufactured by vacuum moulding.

8. A microtitre plate according to any of claims 1-7 for use in an analysis method measuring light emitted in, or transmitted through, the wells of the microtitre plate.

9. A microtitre plate according to claim 8, wherein the analysis method utilizes photometry, chemiluminescence, bioluminescence and/or fluorescence.

10. A microtitre plate according to claim 8, wherein the analysis method is sequencing-by-synthesis.

## Patentansprüche

1. Mikrotiterplatte mit Vertiefungen, die transparente Böden haben, wobei die Mikrotiterplatte wenigstens eine physikalische Verformung auf der Oberseite zwischen wenigstens zwei benachbarten Vertiefungen hat.

2. Mikrotiterplatte nach Anspruch 1, bei der die physikalische Verformung die Gestalt eines Kanals, eines Grates, eines Loches, eine Schlitzes oder einer Stufe hat.

3. Mikrotiterplatte nach Anspruch 1 oder 2, bei der die physikalische Verformung die Gestalt eines Kanals hat.

4. Mikrotiterplatte nach einem der Ansprüche 1 bis 3, bei der die physikalischen Verformungen die Vertiefungen in einem geometrischen Muster umgeben.

5. Mikrotiterplatte nach Anspruch 4, bei der die physikalischen Verformungen die Vertiefungen in Gestalt von Kreisen, Gittern oder Quadraten umgeben.

6. Mikrotiterplatte nach einem der vorhergehenden Ansprüche, wobei die Mikrotiterplatte in einem Stück hergestellt ist.

7. Mikrotiterplatte nach Anspruch 6, wobei die Mikrotiterplatte durch Vakuumguss hergestellt ist.

8. Mikrotiterplatte nach einem der Ansprüche 1 bis 7 für die Verwendung bei einem Analyseverfahren, das Licht misst, das in den Vertiefungen der Mikrotiterplatte emittiert oder durch diese übertragen wird.

9. Mikrotiterplatte nach Anspruch 8, bei der das Analyseverfahren die Fotometrie, die Chemolumineszenz, die Biolumineszenz und/oder die Fluoreszenz einsetzt.

10. Mikrotiterplatte nach Anspruch 8, bei der das Analyseverfahren Sequenzieren durch Synthese (sequencing-by-synthesis) ist.

## Revendications

1. Plaque de microtitrage avec des puits ayant des fonds transparents, dans laquelle ladite plaque de microtitrage comprend au moins une déformation physique sur la surface supérieure entre au moins deux puits adjacents.

2. Plaque de microtitrage selon la revendication 1, dans laquelle ladite déformation physique a la forme d'un canal, d'une crête, d'un trou, d'une fente ou d'un échelon.

3. Plaque de microtitrage selon la revendication 1 ou 2, dans laquelle la déformation physique a la forme d'un canal.

4. Plaque de microtitrage selon l'une quelconque des revendication 1 à 3, dans laquelle les déformations physiques entourent les puits selon n'importe quel motif géométrique.

5. Plaque de microtitrage selon la revendication 4, dans laquelle les déformations physiques entourent les puits sous la forme de cercles, de grilles ou de carrés.

6. Plaque de microtitrage selon l'une quelconque des revendications précédentes, dans laquelle la plaque de microtitrage est fabriquée d'un seul tenant.

7. Plaque de microtitrage selon la revendication 6, dans laquelle la plaque de microtitrage est fabriquée par moulage sous vide.

8. Plaque de microtitrage selon l'une quelconque des revendication 1 à 7, destinée à être utilisée dans un procédé d'analyse mesurant la lumière émise dans, ou transmise à travers, les puits de la plaque de microtitrage.

9. Plaque de microtitrage selon la revendication 8, dans laquelle le procédé d'analyse utilise la photométrie, la chimioluminescence, la bioluminescence et/ou la fluorescence.

10. Plaque de microtitrage selon la revendication 8, dans laquelle le procédé d'analyse est un séquençage par synthèse.
